# EUROPEAN PATENT APPLICATION

(11) **EP 4 818 745 A1**
(43) Date of publication of application: **07.10.2026**
(21) Application number: 24896486.8
(22) Date of filing: 25.11.2024
(51) Int. Cl.: G01S 7/481, G01S 17/931, A47L 11/40, A47L 11/282

(54) **OPTICAL MODULE AND CLEANING DEVICE**

(30) Priority: 27.11.2023 CN 202311597711
(71) Applicant: Beijing Roborock Technology Co., Ltd., Beijing 102206 (CN)
(72) Inventor: WANG, Miao, Beijing 102206 (CN); ZHANG, Wei, Beijing 102206 (CN)
(74) Representative: Winter, Brandl - Partnerschaft mbB
(86) International application number: PCT/CN2024/134343
(87) International publication number: WO 2025/113397

(57) **Abstract**

An optical module (100) and a cleaning device (200). The optical module (100) comprises: a light source assembly (140), a receiving assembly (150), and a field-of-view folding assembly (110). The light source assembly (140) is used for transmitting a detection signal to detect a target object. The receiving assembly (150) is used for receiving an echo signal reflected by the target object, and the receiving assembly (150) at least forms a receiving field of view in the vertical direction. The field-of-view folding assembly (110) is configured to fold a portion of the receiving field of view to form a first receiving field of view (101), and the unfolded receiving field of view forms a second receiving field of view (102). The direction in which the first receiving field of view (101) receives an echo signal is different from the direction in which the second receiving field of view (102) receives an echo signal.

## Description

### CROSS-REFERENCE TO RELATED APPLICATION

The present disclosure claims priority to Chinese Patent Application No. 202311597711.7 filed on November 27, 2023, which is incorporated herein by reference in its entirety as a part of the present disclosure.

### TECHNICAL FIELD

The present disclosure relates to the technical field of cleaning devices, and in particular, to an optical module and a cleaning device.

### BACKGROUND ART

With the advancement of technologies, autonomous mobile devices such as service robots and cleaning robots have been widely used in scenarios such as industrial sites, commercial places, and residential households. An autonomous mobile device needs to actively determine and avoid obstacles in a complex environment. To ensure that the autonomous mobile device can effectively perceive the surrounding environment in real time and avoid close-range blockage by an object, a detection module or an optical module can be disposed inside the autonomous mobile device to implement navigation and obstacle avoidance. However, existing detection modules or optical modules have a complex structure or are provided in large quantities, affecting the structural layout of the autonomous mobile device and increasing the cost of the autonomous mobile device.

### SUMMARY OF THE INVENTION

An objective of the present disclosure is to provide an optical module and a cleaning device in view of the technical problems in the related art. Specific solutions are as follows.

A first aspect of the embodiments of the present disclosure provides an optical module. The optical module includes: a light source assembly configured to emit a detection signal to detect a target object; a receiving assembly configured to receive an echo signal reflected by the target object, the receiving assembly at least forming a receiving field of view along a vertical direction; and a field of view folding assembly configured to fold a portion of the receiving field of view to form a first receiving field of view, an unfolded portion of the receiving field of view forming a second receiving field of view. A direction in which the first receiving field of view receives the echo signal is different from a direction in which the second receiving field of view receives the echo signal.

In some embodiments, the first receiving field of view is substantially located above a horizontal plane where a center line of the receiving field of view is located.

In some embodiments, the direction in which the first receiving field of view receives the echo signal is opposite to the direction in which the second receiving field of view receives the echo signal.

In some embodiments, the field of view folding assembly is configured as a mirror having a reflective surface and configured to reflect a detection signal.

In some embodiments, the reflective surface of the field of view folding assembly is substantially perpendicular to an interface between the first receiving field of view and the second receiving field of view.

In some embodiments, the light source assembly includes a first light source and a second light source, and the first light source and the second light source are configured to emit detection signals along the first receiving field of view and/or the second receiving field of view.

In some embodiments, the first light source and the second light source are configured to emit detection signals along the first receiving field of view and/or the second receiving field of view in a time-sharing manner or simultaneously.

In some embodiments, the first light source and the second light source emit different wavelengths.

In some embodiments, the light source assembly further includes a shaping assembly configured to shape the detection signal into a surface emission signal.

In some embodiments, the shaping assembly includes at least one of the following: a single lens, a lens group, or a diffuser.

In some embodiments, the receiving assembly includes: a sensor configured to receive the echo signal; and a lens assembly configured to converge the echo signal to the sensor.

In some embodiments, the receiving assembly further includes a light filter configured to filter out stray light.

A second aspect of the embodiments of the present disclosure provides a cleaning device. The cleaning device includes the optical module according to the first aspect of the embodiments of the present disclosure.

The optical module provided by the present disclosure includes a field of view folding assembly, which can fold a portion of the original receiving field of view on the basis of the original field of view to form the first receiving field of view and the second receiving field of view whose direction is different from that of the first receiving field of view. The receiving assembly can receive the echo signals of the first receiving field of view and the second receiving field of view and determine the surrounding target object through the echo signals in different directions, thereby achieving multi-directional detection with only one optical module.

It should be understood that both the foregoing general description and the following detailed description are exemplary and explanatory only and are not construed as limiting the present disclosure.

### BRIEF DESCRIPTION OF THE DRAWINGS

The drawings, which are incorporated into and constitute a part of the specification, illustrate embodiments consistent with the present disclosure and are used in conjunction with the specification to explain the principles of the present disclosure. Apparently, the drawings in the following description are merely some embodiments of the present disclosure, and those of ordinary skill in the art may still derive other drawings from these drawings without creative efforts. In the drawings:
FIG. 1 is a schematic structural diagram of a cleaning device according to a related art;
FIG. 2 is a schematic structural diagram of a cleaning device according to some embodiments;
FIG. 3 is a schematic structural diagram of an optical module according to some embodiments; and
FIG. 4 is a schematic structural diagram of an angle of field of view of an optical module according to some embodiments.

### Reference numerals:

detection module 100';
optical module 100, first receiving field of view 101, second receiving field of view 102, field of view folding assembly 110, circuit board 120, lens assembly 130, light source assembly 140, light source 141, shaping assembly 142, receiving assembly 150, sensor 151, focusing assembly 152, lens holder 160, and cleaning device 200.

### DETAILED DESCRIPTION

For clearer descriptions of the objectives, technical solutions, and advantages of the present disclosure, the present disclosure is further described in detail hereinafter with reference to the drawings. Apparently, the described embodiments are merely some embodiments of the present disclosure, rather than all of the embodiments. Based on the embodiments in the present disclosure, all other embodiments obtained by those of ordinary skill in the art without creative efforts shall fall within the scope of protection of the present disclosure.

The terms used in the embodiments of the present disclosure are for the purpose of describing particular embodiments only and are not intended to limit the present disclosure. As used in the embodiments and the appended claims of the present disclosure, the singular forms "a", "an", and "the" are intended to include the plural forms as well, unless the context clearly indicates otherwise, and "a plurality of" generally includes at least two. Other qualifiers are similar.

It should be understood that although the terms "first", "second", "third", and the like may be used in the embodiments of the present disclosure for description, such descriptions should not be limited to these terms. These terms are only used to distinguish the described objects from each other. For example, "first" may also be referred to as "second", and similarly, "second" may also be referred to as "first", without departing from the scope of the embodiments of the present disclosure. In addition, the terms "first", "second", "third", and the like are used herein for descriptive purposes only and should not be construed as indicating or implying relative importance.

It should be understood that the term "and/or" as used herein is merely a description of an association relationship between associated objects, indicating that three possible relationships may exist. For example, "A and/or B" can represent: the presence of A alone, the simultaneous presence of A and B, and the presence of B alone. In addition, the character "/" herein generally indicates an "or" relationship between the associated objects before and after the "/". The singular forms "a", "an", and "the" are intended to include the plural forms as well, unless the context clearly indicates otherwise.

It should be further noted that the terms "comprise", "include", or any other variants thereof are intended to encompass a non-exclusive inclusion, such that a commodity or an apparatus including a list of elements includes not only those elements, but also other elements not explicitly listed or inherent to such commodity or apparatus. Without further limitation, an element defined by the phrase "comprising a/an..." or "including a/an..." does not exclude the presence of other identical elements in the commodity or apparatus including the element.

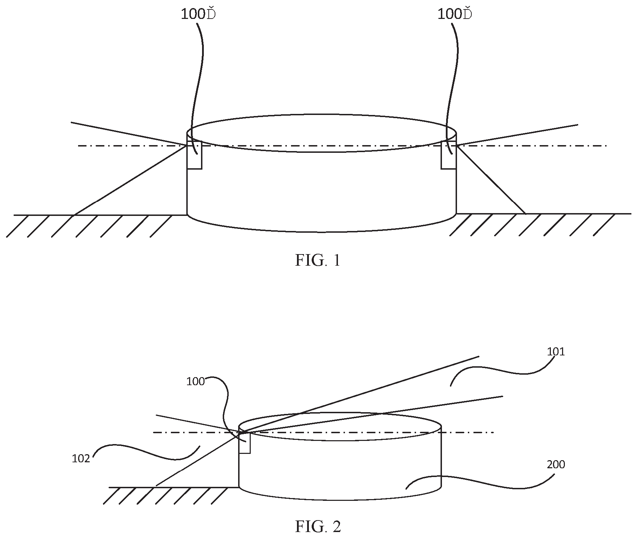

In the related art, to enable the cleaning device to automatically navigate and avoid obstacles during an automatic cleaning process, a detection module 100' is disposed at both a front end and a rear end of the cleaning device. As shown in FIG. 1, a front field of view and a rear field of view in a moving direction of the cleaning device are acquired respectively by two detection modules 100'. Further, obstacle detection is performed in the front field of view and the rear field of view, so as to implement obstacle detection, navigation, and avoidance in front of and behind the cleaning device. In one aspect, the arrangement of the two detection modules 100' occupies the internal space of the cleaning device and thus increases the power consumption of the cleaning device. In another aspect, after being mounted into the cleaning device, the two detection modules 100' need to be subjected to extrinsic parameter calibration, which increases the volume and complexity of the jig, reduces the production efficiency, affects the arrangement of other functional components, and also greatly increases the cost of the cleaning device.

Based on this, the present disclosure provides an optical module. The optical module includes: a light source assembly configured to emit a detection signal to detect a target object; a receiving assembly configured to receive an echo signal reflected by the target object, the receiving assembly at least forming a receiving field of view along a vertical direction; and a field of view folding assembly configured to fold a portion of the receiving field of view to form a first receiving field of view, an unfolded portion of the receiving field of view forming a second receiving field of view. A direction in which the first receiving field of view receives the echo signal is different from a direction in which the second receiving field of view receives the echo signal.

The optical module provided by the present disclosure can fold a portion of the original receiving field of view on the basis of the original field of view to form the first receiving field of view and the second receiving field of view whose direction is different from that of the first receiving field of view. The receiving assembly can receive the echo signals of the first receiving field of view and the second receiving field of view and determine the surrounding target object through the echo signals in different directions, thereby achieving multi-directional detection with only one optical module.

Optional embodiments of the present disclosure will be described in detail hereinafter with reference to the drawings.

FIG. 2 is a schematic diagram of a three-dimensional structure of a cleaning device according to some embodiments, where a receiving field of view is a receiving field of view in a vertical plane. As shown in FIG. 2, the embodiments of the present disclosure provide an optical module 100 and a cleaning device 200 equipped with the optical module 100. The optical module 100 is disposed on one side of the cleaning device 200 to perform environment detection. For example, the optical module may be disposed at a front end or a rear end of the cleaning device 200, or may be disposed on any one side of the cleaning device 200, which is not limited herein. The case in which the optical module is disposed at the front end of the cleaning device 200 is taken as an example for illustration hereinafter. The optical module 100 forms a folded first field of view 101 and an unfolded second field of view 102. The first field of view 101 and the second field of view 102 are configured to detect different directions of the cleaning device 200.

In some embodiments, the optical module 100 may be based on a 3dToF module with a folded field of view. 3dToF refers to determining the distance between a lens module and an object in the surrounding environment based on the lens module by using a ToF (Time of Flight, Time of Flight) measurement principle, and generating 3D depth information through a measurement point. The ToF measurement principle is as follows: An emitted detection light is reflected after encountering an object in a flight process; after receiving reflection information, a device completes one information collection event; a sensor calculates the distance to a photographed object by calculating the time difference or the phase difference between light emission and light reflection.

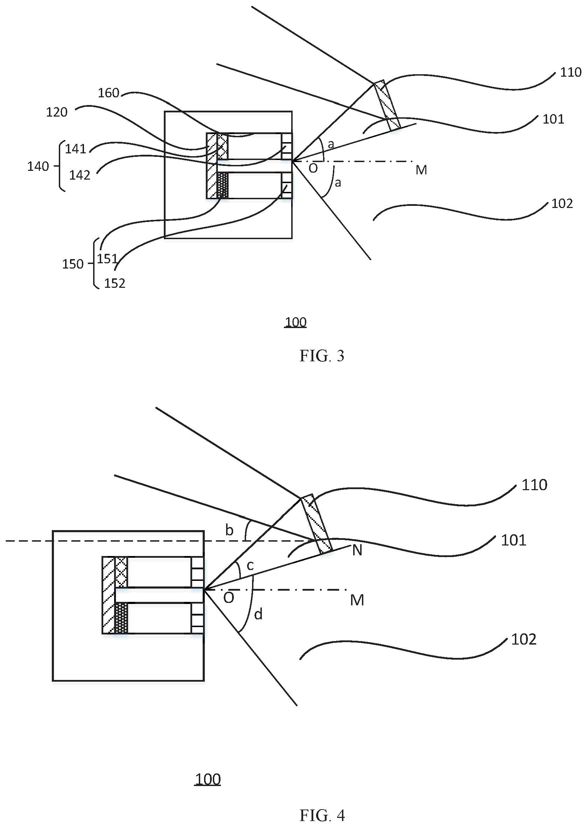

FIG. 3 is a schematic structural diagram of an optical module in a vertical plane according to some embodiments. In some embodiments, as shown in FIG. 3, the optical module 100 includes: a light source assembly 140, a receiving assembly 150, and a field of view folding assembly 110. The light source assembly 140 is configured to emit a detection signal to detect the surrounding environment of the cleaning device 200. The receiving assembly 150 is configured to receive an echo signal reflected by the target object. The field of view folding assembly 110 is configured to fold a receiving field of view in a single direction to form receiving fields of view in different directions, such that environment detection in fields of view in at least two directions can be achieved by providing one optical module in the cleaning device. For example, the cleaning device can simultaneously perform environment detection on a front field of view and a rear field of view in a moving direction of the cleaning device through the one optical module.

Specifically, a circuit board 120 and a lens holder 160 are disposed in the optical module 100. At least a portion of the light source assembly 140 and at least a portion of the receiving assembly 150 are disposed on the circuit board 120. For example, the light source assembly 140 includes a light source 141 and a shaping assembly 142, the receiving assembly 150 includes a sensor 151 and a focusing assembly 152, the light source 141 and the sensor 151 are both disposed on the circuit board 120, and the shaping assembly 142 and the focusing assembly 152 are disposed on the lens holder 160. The light source assembly 140 emits a detection signal to detect information, such as the direction, the position, the size, and the like, of a target object. The detection signal is reflected by the target object to form an echo signal, which enters a receiving field of view of the receiving assembly 150 and is received by the receiving assembly 150. The environmental state around the cleaning device is determined through calculation and analysis by other peripheral devices in the optical module 100.

In some embodiments, the light source assembly 140 includes at least one light source 141. For example, the light source assembly may include one laser light source, two laser light sources, three laser light sources, or the like. The number is not strictly limited, as long as it is within a reasonable range.

It should be noted that the type of the laser device is not limited in the present disclosure, and the laser device includes, but is not limited to, an edge-emitting laser (EEL) with horizontal resonance and horizontal light emission, or a vertical-cavity surface-emitting laser (VCSEL) with vertical resonance and vertical light emission.

Further, the wavelength of the laser emitted by the laser device is not limited in the present disclosure, and the laser may be visible light or invisible light. The invisible light is, for example, an infrared laser, and the wavelength includes, but is not limited to, 808 nm, 850 nm, 905 nm, 920 nm, and 940 nm.

In some embodiments, the light source assembly 140 further includes a shaping assembly 142. Optionally, the shaping assembly 142 may be one or a combination of a single lens, a lens group, or a diffuser. The material of the lens includes, but is not limited to, glass, PC, PMMA, and the like. The shaping assembly 142 is configured to shape the detection signal emitted by the at least one light source 141 into a surface emission signal, and the surface emission signal forms a substantially cone-shaped detection light beam to be emitted to the surroundings of the cleaning device 200, such that the echo signal can enter the receiving field of view. The wider the cone-shaped detection light beam in the horizontal direction, the better. For example, a range of 150-180 degrees can be detected in the horizontal direction, thereby covering a detection range as wide as possible. Limited by the structure of the light source, the light source can usually cover a range of 60-90 degrees in the vertical direction.

In some embodiments, the receiving assembly 150 includes at least one sensor 151. For example, the receiving assembly may include one sensor, two sensors, or a surface receiving sensor formed by a plurality of sensors. The number of sensors is not strictly limited, as long as it is within a reasonable range and is sufficient to form a required receiving field of view. The sensor includes, but is not limited to, an iToF (indirect Time-of-Flight, indirect Time-of-Flight) sensor and a dToF (direct Time-of-Flight, direct Time-of-Flight) sensor.

In some embodiments, the receiving assembly 150 further includes a focusing assembly 152. Optionally, the focusing assembly 152 may be the lens, which may be a single lens, or may be a lens group consisting of a plurality of lenses. The material of the lens includes, but is not limited to, glass, PC, PMMA, and the like. The focusing assembly 152 is configured to receive the echo signal and converge the echo signal to the sensor 151.

In some embodiments, the receiving assembly 150 forms a substantially cone-shaped receiving field of view centered around the receiving assembly 150. Generally, echo signals entering the receiving field of view can be received by the receiving assembly 150. The wider the cone-shaped receiving field of view in the horizontal direction, the better. For example, a range of 100-180 degrees can be detected in the horizontal direction, thereby covering a detection range as wide as possible. Limited by the detection signal of the detection light source, the receiving field of view can usually cover a range of 60-120 degrees in the vertical direction. The embodiments aim to expand the detection direction by folding part of the field of view in the vertical direction.

In some embodiments, a field of view folding assembly 110 is provided inside the receiving field of view. The field of view folding assembly 110 folds a portion of the receiving field of view, and the folded portion of the field of view can receive echo signals in a direction different from the direction in which the original field of view receives echo signals The folded portion of the receiving field of view forms a first receiving field of view 101, and the unfolded portion of the receiving field of view still maintains the direction of the original receiving field of view and forms a second receiving field of view 102. It should be noted that, due to the arrangement of the field of view folding assembly 110, the cone-shaped detection signal formed by the light source assembly 140 is also folded, such that the folded detection light beam can be received by the folded first receiving field of view 101, and the unfolded detection light beam can be received by the unfolded second receiving field of view 102, thereby completing detection in at least two directions.

It can be understood that the field of view folding assembly 110 may also form detection light beams and folded field of views folding toward multiple directions, thereby enabling synchronous detection in multiple directions, which is not specifically limited.

Specifically, the substantially cone-shaped receiving field of view formed in space by the receiving field of view has an axis OM, and the receiving field of view forms identical divergence angles a about the axis OM in the vertical plane, as shown in FIG. 3. The first receiving field of view 101 is substantially located above a horizontal plane where the axis OM is located.

Further, the first receiving field of view 101 only receives the target object echo signal within the first receiving field of view 101, and the second receiving field of view 102 only receives the target object echo signal within the second receiving field of view 102. Due to the arrangement of the field of view folding assembly 110, the direction of the emission signal for the first receiving field of view 101 is different from the direction of the emission signal for the second receiving field of view 102. Therefore, the direction in which the first receiving field of view 101 receives the echo signal is different from the direction in which the second receiving field of view 102 receives the echo signal, and the receiving assembly 150 can achieve navigation and obstacle avoidance in the fields of view in two directions by receiving the echo signal in the first receiving field of view 101 and the echo signal in the second receiving field of view 102.

FIG. 4 is a schematic structural diagram of an angle of field of view of an optical module in a vertical plane according to some embodiments. In some embodiments, as shown in FIG. 4, the reflective surface where the field of view folding assembly 110 is located is substantially perpendicular to the interface ON between the first receiving field of view 101 and the second receiving field of view 102. When the field of view folding assembly 110 is substantially perpendicular to the interface ON, the detection signal in the first receiving field of view 101 may be reflected by the reflective surface of the field of view folding assembly 110 to a direction different from that of the second receiving field of view 102, such as an opposite direction or other directions. In this case, the first receiving field of view 101 and the second receiving field of view 102 have different field of view directions. Further, the direction of the echo signal received by the first receiving field of view 101 is different from the direction of the echo signal received by the second receiving field of view 102.

In some embodiments, the field of view folding assembly 110 may be a single mirror, a mirror group, or a lens group. The material of the lens includes, but is not limited to, glass, PC, PMMA, and the like. The field of view folding assembly 110 may fold the first receiving field of view 101 to one or more directions as required. In this case, one or more reflective surfaces are provided on a side of the field of view folding assembly 110 facing the light source.

As shown in FIG. 4, there is an included angle b between the lower edge of the folded second receiving field of view 102 and the horizontal plane. The larger the elevation angle between the field of view folding assembly 110 and the lower edge of the second receiving field of view 102 is controlled to be, the larger the included angle b. Further, the position of the boundary line between the first receiving field of view 101 and the second receiving field of view 102 can be changed by controlling the pitch degree of the field of view folding assembly 110, such that the magnitude of the included angle c of the first receiving field of view 101 and the included angle d of the second receiving field of view 102 can be adjusted. The field of view folding assembly 110 always maintains that 2a = c + d during the adjustment of the elevation angle, so as to control the magnitude of the included angle b, thereby ensuring that the lower edge of the first receiving field of view 101 is not obstructed by the optical module. In addition, to prevent the lower edge of the first receiving field of view 101 from being obstructed by the cleaning device, a housing made of a transparent material may be used in the propagation path of the optical path.

In some embodiments, the light source 141 includes a first light source and a second light source. The first light source and the second light source are configured to emit detection signals along the first receiving field of view 101 and/or the second receiving field of view 102. The first light source and the second light source emit detection signals of different wavelengths to avoid interference. For example, the first light source is visible light, and the second light source is infrared light, or both the first light source and the second light source are infrared light of different wavelengths.

In some embodiments, the first light source may emit a detection signal along the first receiving field of view 101 and the second receiving field of view 102. When the first light source emits a detection signal along the first receiving field of view 101, the first light source is reflected by a target object within the first receiving field of view 101 to form an echo signal for detecting the target object within the first receiving field of view 101. When the first light source emits a detection signal along the second receiving field of view 102, the first light source is reflected by a target object within the second receiving field of view 102 to form an echo signal for detecting the target object within the second receiving field of view 102.

Similarly, the second light source may also emit a detection signal along the first receiving field of view 101 and the second receiving field of view 102. When the second light source emits a detection signal along the first receiving field of view 101, the second light source is reflected by a target object within the first receiving field of view 101 to form an echo signal for detecting the target object within the first receiving field of view 101. When the second light source emits a detection signal along the second receiving field of view 102, the second light source is reflected by a target object within the second receiving field of view 102 to form an echo signal for detecting the target object within the second receiving field of view 102.

In some other embodiments, the first light source and the second light source may simultaneously emit detection signals toward the first receiving field of view 101. When the first light source and the second light source simultaneously emit detection signals toward the first receiving field of view 101, the receiving assembly 150 receives the echo signals formed by the first light source and the second light source within the first receiving field of view 101, and further analyzes the echo signals received within the first receiving field of view 101 to determine the position and size of the target object within the first receiving field of view 101.

Similarly, when the first light source and the second light source simultaneously emit detection signals toward the second receiving field of view 102, the receiving assembly 150 receives the echo signals formed by the first light source and the second light source within the second receiving field of view 102, and further analyzes the echo signals received within the second receiving field of view 102 to determine the position and size of the target object within the second receiving field of view 102.

In some embodiments, the first light source and the second light source may emit detection signals along the first receiving field of view 101 and the second receiving field of view 102 in a time-sharing manner.

Specifically, at a certain moment, the first light source emits a detection signal to the first receiving field of view 101 and the second receiving field of view 102 separately to detect target objects within the first receiving field of view 101 and the second receiving field of view 102 separately. When the first light source emits a detection signal to the first receiving field of view 101 and the second receiving field of view 102 separately, the first light source contacts the target objects within the first receiving field of view 101 and the second receiving field of view 102 separately to generate echo signals. Further, the echo signals feed back optical information to the receiving assembly 150, and the receiving assembly 150 receives and analyzes the echo signals within the first receiving field of view 101 and the second receiving field of view 102, and determines the positions or sizes of the target objects within the first receiving field of view 101 and the second receiving field of view 102 based on the echo signals.

At the next moment, the second light source emits a detection signal to the second receiving field of view 102 and the first receiving field of view 101 to detect target objects within the second receiving field of view 102 and the first receiving field of view 101 separately. When the second light source emits a detection signal to the second receiving field of view 102 and the first receiving field of view 101 separately, the second light source contacts the target objects within the second receiving field of view 102 and the first receiving field of view 101 separately to generate echo signals. Further, the echo signals feed back optical information to the receiving assembly 150, and the receiving assembly 150 receives and analyzes the echo signals within the second receiving field of view 102 and the first receiving field of view 101, and determines the positions or sizes of the target objects within the second receiving field of view 102 and the first receiving field of view 101 based on the echo signals.

In some other embodiments, the first light source and the second light source are configured to emit detection signals to the first receiving field of view 101 and the second receiving field of view 102, respectively, at the same time to determine the target object within the second field of view.

Specifically, the first light source and the second light source may emit detection signals to the first receiving field of view 101 and the second receiving field of view 102, respectively, at the same time. For example, the first light source emits a detection signal to the first receiving field of view 101, the second light source emits a detection signal to the second receiving field of view 102, the first light source contacts the target object within the first receiving field of view 101 and forms a first optical echo to be transmitted back to the receiving assembly 150, and the second light source contacts the target object within the second receiving field of view 102 and forms a second optical echo to be transmitted back to the receiving assembly 150. The receiving assembly 150 receives the first optical echo and the second optical echo at the same time, and forms optical analysis on the target objects within the first receiving field of view 101 and the second receiving field of view 102 based on the first optical echo and the second optical echo, thereby acquiring data in two receiving fields of view at the same time with simply one optical module 100. This improves the analysis efficiency while saving the production cost, and thereby improves the user experience.

The principle is the same as that described above when the first light source emits a detection signal to the second receiving field of view 102 and the second light source emits a detection signal to the first receiving field of view 101. Details are not described herein again.

In some embodiments, the receiving assembly 150 further includes a light filter, and the light filter is configured to filter out stray light, such that the echo signal is more easily recognized and determined by the receiving assembly 150, thereby avoiding a deviation of the analysis result of the target object caused by the stray light.

A second aspect of the embodiments of the present disclosure provides a cleaning device 200. The cleaning device includes the optical module 100 according to any one of the above embodiments of the present disclosure. As shown in FIG. 2, the optical module 100 is disposed on one side of the cleaning device 200 to detect an obstacle. For example, the optical module is disposed at a front end or a rear end of the cleaning device 200.

In some embodiments, a portion, in contact with the optical module 100, of the top of the cleaning device 200 may be configured as a transparent window to avoid blocking of the optical path by the cleaning device 200. The light source folded by the field of view folding assembly 110 may emit a detection signal through the transparent window to detect a target object within the first receiving field of view 101.

Further, the transparent window may extend to a side surface of the cleaning device 200, and the area of the transparent window is increased, which facilitates the emission of the light source within the first receiving field of view 101 through the transparent window to receive and detect the target object within the first receiving field of view 101.

The optical module 100 applied to the cleaning device 200 can meet the requirements for navigation and obstacle avoidance of the cleaning device 200. Since the cleaning device 200 generally does not require a large angle of field of view in the vertical direction during operation, the field of view folding assembly 110 is provided, and the portion of the top field of view in the angle of field of view in the vertical direction is folded to different directions by the reflection of the field of view folding assembly 110. This can enhance the detection of obstacles in other directions of the cleaning device. For example, after the first receiving field of view 101 is folded to an obliquely rear upper position, the first receiving field of view may be used for backward navigation of the cleaning device 200, and the remaining second receiving field of view 102 may still meet the requirements for forward navigation and obstacle avoidance of the cleaning device 200.

In the cleaning device according to the present disclosure, only one optical module is required to complete the forward navigation and obstacle avoidance and backward navigation functions of the cleaning device. This simplifies the extrinsic parameter calibration in the manufacturing process of the cleaning device, reduces the volume and complexity of the jig, improves the production efficiency, and reduces the production cost.

For specific structures, working principles, and beneficial effects of the optical module 100 and the cleaning device 200 provided in the embodiments of the present disclosure, reference may be made to the optical module 100 described in any one of the above embodiments and existing cleaning devices 200. Details are not described herein again.

Finally, it should be noted that the embodiments in the specification are described in a progressive manner, and each embodiment focuses on differences from other embodiments, and reference may be made to each other for the same or similar parts. Since the system or apparatus disclosed in the embodiments corresponds to the method disclosed in the embodiments, the description is relatively simple, and reference may be made to the description of the method part for relevant points.

The above embodiments are only used to illustrate the technical solutions of the present disclosure, but not to limit them. Although the present disclosure has been described in detail with reference to the foregoing embodiments, those of ordinary skill in the art should understand that they can still modify the technical solutions recorded in the foregoing embodiments or make equivalent substitutions for some of the technical features, and these modifications or substitutions do not make the essence of the corresponding technical solutions deviate from the spirit and scope of the technical solutions in the embodiments of the present disclosure.

## Claims

1. An optical module, comprising:
a light source assembly, configured to emit a detection signal to detect a target object;
a receiving assembly, configured to receive an echo signal reflected by the target object, the receiving assembly at least forming a receiving field of view along a vertical direction; and
a field of view folding assembly, configured to fold a portion of the receiving field of view to form a first receiving field of view, an unfolded portion of the receiving field of view forming a second receiving field of view,
wherein a first direction in which the first receiving field of view receives the echo signal is different from a second direction in which the second receiving field of view receives the echo signal.

2. The optical module according to claim 1, wherein
the first receiving field of view is substantially located above a horizontal plane where a center line of the receiving field of view is located.

3. The optical module according to claim 1, wherein
the first direction is opposite to the second direction.

4. The optical module according to claim 1, wherein
the field of view folding assembly is configured as a mirror having a reflective surface and configured to reflect a detection signal.

5. The optical module according to claim 4, wherein
the reflective surface of the field of view folding assembly is substantially perpendicular to an interface between the first receiving field of view and the second receiving field of view.

6. The optical module according to claim 1, wherein
the light source assembly comprises a first light source and a second light source, and the first light source and the second light source are configured to emit detection signals along at least one of the first receiving field of view or the second receiving field of view.

7. The optical module according to claim 6, wherein
the first light source and the second light source are configured to emit detection signals along at least one of the first receiving field of view or the second receiving field of view in a time-sharing manner or simultaneously.

8. The optical module according to claim 6, wherein
the first light source and the second light source emit different wavelengths.

9. The optical module according to claim 1, wherein the light source assembly further comprises:
a shaping assembly, configured to shape the detection signal into a surface emission signal.

10. The optical module according to claim 9, wherein
the shaping assembly comprises at least one of the following: a single lens, a lens group, or a diffuser.

11. The optical module according to claim 1, wherein the receiving assembly comprises:
a sensor, configured to receive the echo signal; and
a lens assembly, configured to converge the echo signal to the sensor.

12. The optical module according to claim 11, wherein the receiving assembly further comprises:
a light filter, configured to filter out stray light.

13. A cleaning device, comprising:
the optical module according to any one of claims 1 to 12.
